# FASCICULE DE BREVET EUROPEEN

(11) **EP 2 254 179 B1**
(45) Date de publication et mention de la délivrance du brevet: **15.06.2016**
(21) Numéro de dépôt: 10162920.2
(22) Date de dépôt: 17.05.2010
(51) Int. Cl.: H01M 4/26, H01M 4/32, H01M 4/52, H01M 4/62, H01M 4/66, H01M 4/74, H01M 10/30, H01M 4/04

(54) **Electrode plastifiée pour accumulateur alcalin**
Plastifizierte Elektrode für alkalischen Akkumulator
Plastic-coated electrode for alkaline storage battery

(30) Priorité: 19.05.2009 FR 0902422
(43) Date de publication de la demande: 24.11.2010
(73) Titulaire: Saft Groupe S.A., 93170 Bagnolet (FR)
(72) Inventeur: Bernard, Patrick, 33000 BORDEAUX (FR); Goubault, Lionel, 33360 CARIGAN DE BORDEAUX (FR); Gillot, Stéphane, 33440 AMBARES (FR); Feugnet, Thierry, 16000 ANGOULEME (FR)
(74) Mandataire: Hirsch & Associés

(56) Documents cités:
- EP-A1- 1 837 935
- EP-A1- 2 045 857
- EP-A2- 0 419 221
- US-A- 5 525 444
- US-A- 5 708 349

## Description

### DOMAINE TECHNIQUE

Le domaine technique auquel se rapporte l'invention est celui des électrodes positives plastifiées pour accumulateur à électrolyte alcalin, par exemple de type NiCd, NiMH ou NiZn. L'invention se rapporte également au domaine des procédés de préparation des électrodes positives plastifiées pour accumulateur (générateur électrochimique) à électrolyte alcalin.

### ETAT DE LA TECHNIQUE.

Les électrodes non frittées, dites aussi plastifiées, comprennent généralement un support conducteur de courant sur lequel on dépose par enduction une pâte comprenant une matière électrochimiquement active. Les électrodes non frittées au nickel utilisent généralement un support conducteur tridimensionnel de grande porosité (supérieure à 90%), de type mousse ou feutre de nickel. Une analyse des coûts par composant d'une électrode positive conventionnelle fait apparaître que le support de l'électrode positive, représente plus de 50% du coût de l'électrode.

Une électrode positive non frittée comportant un support conducteur de courant bon marché a été développée pour réduire le coût des accumulateurs. Cette électrode utilise un support conducteur bidimensionnel de type feuillard perforé, et une pâte comprenant une matière électrochimiquement active à base d'hydroxyde de nickel, un composé conducteur et un liant.

Le liant est un composant essentiel de l'électrode car son rôle est d'assurer la cohésion des grains de matière active entre eux et sur le support de l'électrode, avant l'assemblage de l'accumulateur, et durant son fonctionnement. Le liant doit être adhésif vis à vis de la matière active et du support métallique, et suffisamment souple et élastique pour supporter les déformations qui ont lieu lors de la fabrication de l'accumulateur. Il doit aussi posséder une stabilité chimique suffisante vis-à-vis de l'électrolyte alcalin fortement basique, et doit être capable de résister à l'oxydation électrochimique par l'oxygène généré en fin de charge de l'accumulateur. En effet, la réaction d'oxydation du liant génère des carbonates dans l'électrolyte, ce qui dégrade les performances de l'accumulateur. D'autre part, cette réaction entraîne en parallèle une réaction de réduction à l'électrode négative. En conséquence, l'oxydation du liant crée une diminution de la capacité négative excédentaire, proportionnellement à la quantité d'électrons générée par la réaction d'oxydation du liant. Lorsque l'excédent de capacité négative devient nul, l'électrode négative génère de l'hydrogène gazeux en charge, la pression dans l'élément augmente jusqu'à l'ouverture de la soupape de sécurité. Il s'ensuit un assèchement et la fin de vie de l'accumulateur.

Le polytétrafluoroéthylène (PTFE) utilisé comme liant dans les électrodes positives conventionnelles résiste totalement à l'oxydation. Mais ce polymère n'est pas suffisamment adhésif et souple pour réaliser des électrodes positives plastifiées sur un support conducteur de courant bidimensionnel. De nouvelles solutions ont été développées pour résoudre le problème de la tenue mécanique de l'électrode positive non-frittée.

Une solution décrite dans FR-A-2906083 consiste à utiliser un mélange d'un copolymère d'éthylène et d'acétate de vinyle (EVA) et d'un composé cellulosique. L'EVA présente d'excellentes propriétés adhésives. Il suffit d'en ajouter une faible quantité, c'est-à-dire inférieure à 1% en poids par rapport à la masse totale sèche de matière déposée sur le support conducteur de courant, pour obtenir une bonne cohésion de la matière active. Le composé cellulosique est utilisé essentiellement pour ses propriétés épaississantes, indispensables pour la fabrication de la pâte, mais il permet également d'améliorer la cohésion entre les particules d'hydroxyde de nickel. Ces liants ne résistent pas totalement à l'oxydation dans l'électrode positive, mais la quantité de carbonates générée est suffisamment faible pour obtenir une durée de vie satisfaisante. Néanmoins, des mesures récentes ont montré que l'autodécharge de ces éléments augmente fortement dans des applications où la température est élevée (T>40°C). En effet, après oxydation, les liants ne permettent plus d'assurer la cohésion de l'électrode et des particules conductrices de matière active migrent dans le séparateur, générant des micros courts-circuits. Dans ce cas, l'autodécharge de l'accumulateur peut être suffisamment importante pour conduire à une inaptitude dans l'application.

La demande de brevet EP-A-0 930 663 a pour objet une électrode positive non-frittée comprenant un support conducteur et une pâte comprenant une matière électrochimiquement active et un liant ; ce liant comprenant :
- un élastomère choisi parmi un copolymère de styrène, d'éthylène, de butylène et de styrène (SEBS), un terpolymère de styrène, butadiène et vinylpyridine, un copolymère de styrène et de butadiène, qui représente au moins 25% en poids du mélange de liant ;
- et un polymère cristallin choisi parmi un polymère fluoré et une polyoléfine.

La demande de brevet FR-A-2 824 187 propose une électrode positive non-frittée comprenant un support conducteur métallique et une pâte comprenant une matière électrochimiquement active et un liant ; ce liant comprenant :
- un élastomère constitué d'un polymère du butadiène
- et un copolymère de l'éthylène et de l'acétate de vinyle.

Le brevet FR-A-2851081 propose une électrode positive non-frittée comportant un support bidimensionnel recouvert d'une couche contenant un liant caractérisé en ce que ledit liant est un mélange d'un copolymère styrène-acrylate et d'un composé cellulosique choisi parmi la carboxymethylcellulose (CMC), l'hydroxypropylmethylcellulose (HPMC), l'hydroxypropylcellulose (HPC), l'hydroxyethylcellulose (HEC).

Le brevet FR-A-2 899 018 revendique une électrode positive plastifiée comprenant un support conducteur métallique et une pâte comprenant une matière électrochimiquement active et un liant ; ce liant comprenant :
a) un composé de type silane,
b) et un polymère comportant au moins un monomère acrylique, et représentant au moins 0,15% du poids de ladite pâte.

Des accumulateurs alcalins de type NiCd ou NiMH comprenant comme électrodes positives des électrodes frittées ou des électrodes à support tridimensionnel de type mousse ou feutre sont disponibles commercialement. Le problème de la stabilité des performances ou de la stabilité de l'autodécharge est beaucoup moins marqué pour ce type d'électrodes que pour des électrodes non-frittées à support bidimensionnel.

Il est également connu d'utiliser des électrodes positives non-frittées sur des supports bon marchés, qui sont généralement des supports métalliques mis en forme tridimensionnelle ou présentant une très grande rugosité de surface qui permet l'adhésion de la matière active. On peut citer l'article scientifique paru dans Journal of The Electrochemical Society (152, 5 (2005) A905-A912) qui présente les performances d'une électrode positive d'accumulateur NiMH comprenant un feuillard d'acier nickelé tridimensionnel et un liant de type styrène-acrylate. La durée de vie de cet accumulateur est de 1000 cycles à 25°C et de seulement 180 cycles à 45°C à cause de la décomposition du styrène-acrylate. Le remplacement du styrène-acrylate par un liant de type Styrène Anhydride Maléique (SMA) permet d'obtenir une durée de vie de 800 cycles à 45°C.

Le document de brevet japonais JP 3 165 469 propose une électrode de nickel comprenant un support conducteur poreux bidimensionnel, tel une grille, un métal déployé ou un métal perforé, recouvert d'une pâte comportant de l'hydroxyde de nickel, une matériau conducteur et un liant thermoplastique, comme une copolymère butylène/éthylène/styrène.

Le document de brevet européen EP-A-0 750 358 décrit une électrode de nickel non-frittée dont le support est une plaque métallique ondulée où l'on a formé des aspérités pour accrocher une couche micro rugueuse composée de poudre de nickel et/ou de cobalt liée par de l'alcool butadiène PVAI. Sur cette couche, on dépose une pâte comprenant de la carboxyméthylcellulose CMC et un copolymère styrène/butadiène SBR.

La demande de brevet JP A 53 074 247 concerne une électrode de nickel contenant comme matière active un composé du nickel, par exemple un hydroxyde, un matériau conducteur comme du graphite en paillettes et un liant. Le liant est un mélange de polystyrène, et soit un copolymère de l'éthylène et de l'acétate de vinyle, soit un copolymère de styrène/butadiène.

Le document de brevet JP 11-135112 propose une électrode positive composée d'un feuillard comportant des aspérités, une poudre métallique ou de carbone (1-15%), de la poudre de cobalt ou un oxyde de cobalt (1-15%), de la matière active et 0,5-5% d'une résine fluorée comme liant.

Le document US 5 525 444 décrit une électrode positive non frittée d'accumulateur à électrolyte alcalin comprenant un support conducteur de courant et une pâte comprenant une matière électrochimiquement active à base d'hydroxyde de nickel et un liant comprenant un copolymère d'acrylate de sodium et d'alcool vinylique, du polytétrafluoroéthylène et de la carboxyméthylcellulose.

Le document US 5 708 349 décrit une électrode positive non frittée d'accumulateur à électrolyte alcalin comprenant un support conducteur de courant et une pâte comprenant une matière électrochimiquement active à base d'hydroxyde de nickel et un liant comprenant un polyacrylate, du polytétrafluoroéthylène et de la carboxyméthylcellulose.

Le document EP-A-0 419 221 décrit une électrode positive non frittée d'accumulateur à électrolyte alcalin comprenant un support conducteur de courant et une pâte comprenant une matière électrochimiquement active à base d'hydroxyde de nickel et un liant comprenant un polyacrylate, tel que le polyacrylate de sodium ou de potassium, une résine fluorée telle que le polytétrafluoroéthylène et de la carboxyméthylcellulose.

On recherche un accumulateur à électrolyte alcalin comprenant une électrode positive au nickel non frittée utilisant un support métallique autre que mousse ou feutre, une quantité limitée de liant, et présentant un faible taux d'autodécharge ainsi qu'une capacité électrochimique élevée, tout au long de la durée de vie de l'accumulateur dans l'application.

On recherche également un procédé de fabrication d'une électrode non-frittée permettant d'améliorer l'adhérence de la matière électrochimiquement active au support collecteur de courant.

### RESUME DE L'INVENTION

L'invention a pour objet une électrode positive non frittée d'accumulateur à électrolyte alcalin comprenant un support conducteur de courant et une pâte comprenant une matière électrochimiquement active et un liant ;
le liant comprenant :
- au moins un polymère a), choisi dans le groupe comprenant un copolymère de styrène et d'acrylate, un copolymère d'éthylène et d'acétate de vinyle (EVA), ou un mélange de ceux-ci, ledit polymère a) n'étant pas fluoré en une proportion massique inférieure ou égale à 1 % du poids de la pâte ;
- au moins un polymère fluoré b), en une proportion massique allant de 0,5 à 4% du poids de la pâte ;
- au moins un épaississant c) qui est :
   - soit un polymère cellulosique choisi dans le groupe comprenant la carboxymethylcellulose (CMC), l'hydroxypropylmethylcellulose (HPMC), l'hydroxypropylcellulose (HPC), l'hydroxyethylcellulose (HEC),
   - soit un polymère de type polyacideacrylique (PAAC),
   - soit une gomme xanthane, ou un mélange de ceux-ci
   en une proportion massique inférieure ou égale à 0,3% du poids de la pâte.

Selon un mode de réalisation, la proportion massique du polymère a) est de 0,1 à 1%, de préférence de 0,3 à 0,9% du poids de la pâte.

Selon un mode de réalisation, la proportion massique du polymère fluoré b) est de 0,1 à 4%, de préférence de 1 à 3% du poids de la pâte.

Selon un mode de réalisation, la proportion massique de l'épaississant c) est de 0,01 à 0,3%, de préférence de 0,05 à 0,25% du poids de la pâte.

Selon un mode de réalisation, le polymère fluoré est choisi dans le groupe comprenant le polytétrafluoroéthylène (PTFE), un copolymère fluoré éthylène / propylène (FEP), l'hexafluoropropylène (HFP), ou un mélange de ceux-ci. On choisit de préférence le polytétrafluoroéthylène (PTFE).

Selon un mode de réalisation, l'électrode comprend en outre du silane de formule générale X-Si(OR)₃, R pouvant être choisi dans le groupe comprenant les groupements méthyle, éthyle, isopropyle, cyclohexyle ou phényle, et X pouvant être choisi dans le groupe comprenant les groupements epoxy, amine, styrylamine, méthacrylate, vinyle, chloroalkyle.

Selon un mode de réalisation, R est un groupement méthyle et X est un groupement epoxy.

Selon un mode de réalisation, le silane est de type 3-glycidoxypropyltrimethoxy-silane.

Selon un mode de réalisation, la proportion massique de silane par rapport au poids de la pâte est inférieure à 0,5%, de préférence de 0,05 à 0,25 %.

Selon un mode de réalisation, le liant comprend uniquement :
a)un copolymère d'éthylène et d'acétate de vinyle (EVA), ou un copolymère de styrène et d'acrylate ou un mélange de ceux-ci ;
b)un polymère fluoré ;
c)un épaississant qui est :
   - soit un polymère cellulosique choisi dans le groupe comprenant la carboxymethylcellulose (CMC), l'hydroxypropylmethylcellulose (HPMC), l'hydroxypropylcellulose (HPC), l'hydroxyethylcellulose (HEC),
   - soit un polymère de type polyacideacrylique (PAAC),
   - soit une gomme xanthane, ou un mélange de ceux-ci

Selon un mode de réalisation, le support conducteur de courant est choisi dans le groupe comprenant un feuillard plein ou perforé, un métal déployé, une grille.

Selon un mode de réalisation, le support conducteur a une épaisseur dans la zone non perforée inférieure à environ 0,1 mm.

Selon un mode de réalisation, l'électrode comprend en outre de 5 à 20% en poids de la pâte d'un matériau conducteur, de préférence de 5 à 15% du poids de la pâte.

Selon un mode de réalisation, la pâte contient un composé à base d'yttrium, d'ytterbium, de niobium ou de strontium.

Selon un mode de réalisation, l'électrode comprend en outre des fibres.

Cette électrode peut être avantageusement utilisée comme électrode positive d'un accumulateur alcalin de type NiCd, NiMH ou NiZn. La combinaison des composants a), b) et c) dans les proportions mentionnées ci-dessus permet d'obtenir une électrode présentant les propriétés suivantes :
- un faible taux d'autodécharge ainsi qu'une capacité électrochimique élevée tout au long de la durée de vie de l'accumulateur,
- une bonne tenue mécanique ou stabilité mécanique L'invention a également pour objet un accumulateur à électrolyte alcalin comprenant une électrode selon l'invention
   Enfin, l'invention a pour objet un procédé de fabrication d'une électrode positive non frittée d'accumulateur à électrolyte alcalin, ledit procédé comprenant les étapes de :
   a) préparation d'un mélange comprenant :
      - une matière électrochimiquement active,
      - au moins un polymère choisi dans le groupe comprenant un copolymère de styrène et d'acrylate, un copolymère d'éthylène et d'acétate de vinyle (EVA), ou un mélange de ceux-ci, ledit polymère a) n'étant pas fluoré
      - un épaississant qui est :
         - soit un polymère cellulosique choisi dans le groupe comprenant la carboxymethylcellulose (CMC), l'hydroxypropylmethylcellulose (HPMC), l'hydroxypropylcellulose (HPC), l'hydroxyethylcellulose (HEC),
         - soit un polymère de type polyacideacrylique (PAAC),
         - soit une gomme xanthane, ou un mélange de ceux-ci
      - de l'eau
   b) formation d'une pâte ;
   c) ajout d'un polymère fluoré à la pâte obtenue à l'étape b) la proportion massique du polymère choisi dans le groupe comprenant un copolymère de styrène et d'acrylate, un copolymère d'éthylène et d'acétate de vinyle (EVA), ou un mélange de ceux-ci, étant inférieure ou égale à 1 % du poids de la pâte ;
      - la proportion massique du polymère fluoré allant de 0,5 à 4% du poids de la pâte ;
      - la proportion massique de l'épaississant étant inférieure ou égale à 0,3% du poids de la pâte
   d) dépôt de la pâte obtenue à l'étape c) sur un support conducteur ;
   e) séchage de l'électrode.
- Selon un mode de réalisation, dans l'étape c), le polymère fluoré est ajouté à la pâte sous la forme d'une solution aqueuse.

Ce procédé est spécialement adapté pour fabriquer l'électrode selon l'invention. De plus, l'ajout du polymère fluoré séparément des autres constituants du liant permet de limiter les interactions entre ce polymère fluoré et les autres constituants du liant. En raison de l'absence d'interactions entre ce polymère fluoré et les autres constituants du liant, l'électrode obtenue présente une stabilité mécanique accrue.

### BREVE DESCRIPTION DE LA FIGURE

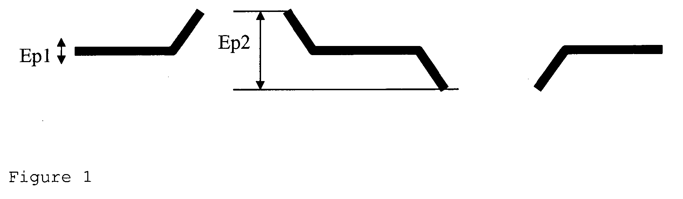

La Figure 1 représente une vue en coupe d'un feuillard perforé dont l'épaisseur dans la zone non perforée est inférieure ou égale à 100 µm, et dont l'épaisseur crête à crête dans la zone de perforation est supérieure à l'épaisseur de la zone non perforée, par exemple 200 µm.

### EXPOSE DETAILLE DES MODES DE REALISATION DE L'INVENTION

L'électrode selon l'invention comprend un support conducteur de courant et une pâte comprenant une matière électrochimiquement active et un liant. Le liant comprend les constituants suivants :
- au moins un polymère a) choisi dans le groupe comprenant un copolymère de styrène et d'acrylate, un copolymère d'éthylène et d'acétate de vinyle (EVA), ou un mélange de ceux-ci, ledit polymère a) n'étant pas fluoré en une proportion massique inférieure ou égale à 1% du poids de la pâte ;
- au moins un polymère fluoré b), en une proportion massique allant de 0,5 à 4% du poids de la pâte ;
- au moins un épaississant c) qui est :
   - soit un polymère cellulosique choisi dans le groupe comprenant la carboxymethylcellulose (CMC), l'hydroxypropylmethylcellulose (HPMC), l'hydroxypropylcellulose (HPC), l'hydroxyethylcellulose (HEC),
   - soit un polymère de type polyacideacrylique (PAAC),
   - soit une gomme xanthane, ou un mélange de ceux-ci
   en une proportion massique inférieure ou égale à 0,3% du poids de la pâte.

De préférence, la proportion massique du polymère a) est de 0,1 à 1%, de préférence de 0,3 à 0,9% du poids de la pâte. De préférence, le polymère a) est un copolymère d'éthylène-acétate de vinyle dans lequel le pourcentage en poids du groupe acétate représente 40-95% du poids du copolymère.

Le polymère fluoré b) peut être choisi dans le groupe comprenant le polytétrafluoroéthylène (PTFE), un copolymère fluoré éthylène / propylène (FEP), l'hexafluoropropylène (HFP), de préférence le polytétrafluoroéthylène (PTFE), ou un mélange de ceux-ci. De préférence, la proportion massique du polymère b) est de 1 à 4%, de préférence encore de 1 à 3% du poids de la pâte.

L'épaississant c) peut être choisi dans le groupe des polymères cellulosiques tels que la carboxymethylcellulose (CMC), l'hydroxypropylmethylcellulose (HPMC), l'hydroxypropylcellulose (HPC), l'hydroxyethylcellulose (HEC), ou un mélange de ceux-ci. Il peut être également un polymère de type polyacideacrylique (PAAC) ou une gomme xanthane. De préférence, la proportion massique de l'épaississant c) est de 0,05 à 0,25% du poids de la pâte.

Dans un mode de réalisation préféré, le liant comprend uniquement :
a) un copolymère d'éthylène et d'acétate de vinyle (EVA), ou un copolymère de styrène et d'acrylate, ou un mélange de ceux-ci ;
b) un polymère fluoré ;
c) un épaississant.

Le liant peut également comprendre un composé de type silane de formule générale X-Si(OR)₃, R pouvant être choisi dans le groupe comprenant les groupements méthyle, éthyle, isopropyle, cyclohexyle ou phényle, et X pouvant être choisi dans le groupe comprenant les groupements epoxy, amine, styrylamine, méthacrylate, vinyle, chloroalkyle. De préférence, R est un groupement méthyle et X est un groupement epoxy. Dans un mode préféré de réalisation, le silane est de type 3-glycidoxypropyltrimethoxy-silane. Généralement, la proportion massique de silane par rapport au poids de la pâte est inférieure à 0,5%, de préférence de 0,05 à 0,25 %.

Tous ces polymères sont soit solubles dans l'eau soit disponibles en dispersion aqueuse, ce qui facilite la fabrication des électrodes par empâtage par voie humide suivi du séchage.

La matière électrochimiquement active est de préférence un hydroxyde à base de nickel. On entend par "hydroxyde à base de nickel" un hydroxyde de nickel, un hydroxyde contenant principalement du nickel, mais également un hydroxyde de nickel contenant au moins un hydroxyde syncristallisé d'un élément choisi parmi le zinc (Zn), le cadmium (Cd), le magnésium (Mg) et l'aluminium (Al), et au moins un hydroxyde syncristallisé d'un élément choisi parmi le cobalt (Co), le manganèse (Mn), l'aluminium (Al), l'yttrium (Y), le calcium (Ca), le zirconium (Zr), le cuivre (Cu). Un hydroxyde syncristallisé contenu dans l'hydroxyde de nickel est un hydroxyde formant une solution solide avec l'hydroxyde de nickel, i.e. occupant, en proportion continûment variable, les sites atomiques définis par le réseau cristallin de l'hydroxyde de nickel.

De préférence, cet hydroxyde possède une forme sphéroïdale et présente une granulométrie comprise entre 7 et 25 µm. L'hydroxyde de nickel peut être de façon préférentielle recouvert par un revêtement (coating) à base d'hydroxyde de cobalt éventuellement partiellement oxydé, ou associé à un composé conducteur, constitué principalement de Co(OH)₂. D'autres composés tels que Co, CoO, LiCoO₂, poudres métalliques, carbones, ZnO, Y₂O₃, Yb₂O₃, Nb₂O₃, SrSO₄, Sr(OH)₂ peuvent être ajoutés à la matière active. Selon un mode de réalisation, la pâte comprend de 5 à 20% de matériau conducteur, de préférence de 5 à 15% du poids de la pâte.

On peut incorporer à la pâte un composé d'yttrium d'ytterbium, de niobium ou de strontium, en un pourcentage massique généralement inférieur à 1% du poids de la pâte.

On peut également incorporer à la pâte des fibres conductrices ou non conductrices. De préférence, la quantité de fibres ajoutées est inférieure à 1,5% du poids de la pâte. De préférence, il s'agira de fibres polymères de polypropylène par exemple, de diamètre compris entre 10 et 35µm et de longueur inférieure à 2mm.

Dans une première étape, on mélange la matière électrochimiquement active, les additifs, tels que le matériau conducteur et les constituants du liant à l'exception du polymère fluoré. On ajoute de l'eau afin d'obtenir une pâte que l'on malaxe.

Dans une deuxième étape, on incorpore à la pâte le polymère fluoré. Dans une forme préférée de réalisation de l'invention, le polymère fluoré est incorporé à la pâte sous la forme d'une solution aqueuse. Pour obtenir une électrode positive plastifiée présentant une bonne adhésion entre la matière et le support, le polymère fluoré doit être introduit séparément des autres liants et en dernier afin de limiter les interactions avec les autres liants.

On dépose la pâte sur un support conducteur de courant. On comprime l'ensemble formé par la pâte déposée sur le collecteur de courant. On sèche l'électrode obtenue sous air à environ 130°C.

Le support conducteur de courant exclut la mousse ou le feutre métallique. Ce peut être un feuillard plein ou perforé, un métal déployé, une grille, dont l'épaisseur est en général inférieure ou égale à 100 µm. Cela peut également être un feuillard perforé dont l'épaisseur dans la zone non perforée est inférieure ou égale à 100 µm, et dont l'épaisseur crête à crête dans la zone de perforation est supérieure à l'épaisseur de la zone non perforée (par exemple 200 µm). Un tel feuillard est représenté figure 1, dans laquelle Ep1 représente l'épaisseur du support dans la zone non perforée et Ep2 représente l'épaisseur crête à crête du support dans la zone perforée.

De préférence, on utilise un feuillard en acier nickelé perforé, caractérisé par une épaisseur dans la zone non perforée comprise entre 20 et 100 µm, une masse surfacique comprise entre 2 et 6 g/dm², un taux de jour compris entre 20 et 80%, un diamètre de perforations compris entre 0,1 et 3 mm.

De préférence encore, on utilise un feuillard en acier nickelé perforé présentant un taux de jour compris entre 35 et 60%, un diamètre de perforation compris entre 0,5 et 1,5 mm.

De préférence encore, on utilise un feuillard en acier nickelé perforé présentant un taux de jour compris entre 45 et 55%, un diamètre de perforation compris entre 0,9 et 1,2 mm.

L'invention a également pour objet un accumulateur alcalin, par exemple de type NiCd ou NiMH, utilisant une électrode positive non frittée décrite ci-dessus et contenant un électrolyte à base de KOH et/ou NaOH et/ou LiOH et un séparateur à base de fibres de polyoléfines non traitées, ou traitées par de l'acide acrylique ou sulfonées ou à base de fibres de polyamide.

L'accumulateur peut être de type cylindrique ou prismatique, ouvert ou étanche (valve-regulated), pour des applications portables ou industrielles (automobile et éclairage de sécurité notamment).

### EXEMPLES

Une électrode positive plastifiée de l'art antérieur (P1) est réalisée avec une pâte ayant pour composition pondérale :

| | |
|---|---|
| Matière électrochimiquement active | 87,5% |
| Matériau conducteur Co(OH)₂ | 10% |
| Polymère A (EVA) | 0,7% |
| Polymère C (CMC) | 0,3% |
| Fibres polypropylène | 1,0% |
| Y₂O₃ | 0,5% |

La matière électrochimiquement active pulvérulente est constituée d'un hydroxyde à base de nickel, et contenant les additifs suivants : cobalt et zinc. La viscosité de la pâte est ajustée avec de l'eau. La pâte est déposée simultanément sur les deux faces d'un feuillard en acier nickelé perforé d'épaisseur 75µm de manière homogène. L'ensemble est ensuite séché afin d'en éliminer l'eau, puis laminé à l'épaisseur désirée et découpée pour obtenir une électrode positive. L'électrode finie, présente une porosité de 35% et 13g de matière enduite sèche par dm².

Une électrode positive plastifiée de l'art antérieur (P2) est réalisée avec une pâte ayant pour composition pondérale :

| | |
|---|---|
| Matière électrochimiquement active | 85,5% |
| Matériau conducteur Co(OH)₂ | 10% |
| SBR carboxylé | 0,7% |
| Polymère B (PTFE) | 2,0% |
| Polymère C (CMC) | 0,3% |
| Fibres polypropylène | 1,0% |
| Y₂O₃ | 0.5% |

La matière électrochimiquement active pulvérulente est constituée d'un hydroxyde à base de nickel, et contenant les additifs suivants : cobalt et zinc. La viscosité de la pâte est ajustée avec de l'eau. Le PTFE est introduit dans l'eau à la fin de la préparation de la pâte. La pâte est déposée simultanément sur les deux faces d'un feuillard en acier nickelé perforé d'épaisseur 75µm de manière homogène. L'ensemble est ensuite séché afin d'en éliminer l'eau, puis laminé à l'épaisseur désirée et découpée pour obtenir une électrode positive. L'électrode finie, présente une porosité de 35% et 13g de matière enduite sèche par dm².

Une électrode positive plastifiée de l'art antérieur (P3) est réalisée avec une pâte ayant pour composition pondérale :

| | |
|---|---|
| Matière électrochimiquement active | 87,3% |
| Matériau conducteur Co(OH)₂ | 10% |
| Polymère A (PolyStyrèneAcrylate)(PSA) | 0,9% |
| Polymère C (CMC) | 0,3% |
| Fibres polypropylène | 1,0% |
| Y₂O₃ | 0,5% |

La matière électrochimiquement active pulvérulente est constituée d'un hydroxyde à base de nickel, et contenant les additifs suivants : cobalt et zinc. La viscosité de la pâte est ajustée avec de l'eau. La pâte est déposée simultanément sur les deux faces d'un feuillard en acier nickelé perforé d'épaisseur 75µm de manière homogène. L'ensemble est ensuite séché afin d'en éliminer l'eau, puis laminé à l'épaisseur désirée et découpée pour obtenir une électrode positive. L'électrode finie, présente une porosité de 35% et 13g de matière enduite sèche par dm².

Une électrode positive plastifiée en dehors du domaine de l'invention (P4) est réalisée avec une pâte ayant pour composition pondérale :

| | |
|---|---|
| Matière électrochimiquement active | 87,6% |
| Matériau conducteur Co(OH)₂ | 10% |
| Polymère A (EVA) | 0,7% |
| Polymère B (PTFE) | 0,4% |
| Polymère C (CMC) | 0,3% |
| Fibre polypropylène | 1,0% |
| Y₂O₃ | 0,5% |

La matière électrochimiquement active pulvérulente est constituée d'un hydroxyde à base de nickel, et contenant les additifs suivants : cobalt et zinc. La viscosité de la pâte est ajustée avec de l'eau. Le PTFE est introduit dans l'eau à la fin de la préparation de la pâte. La pâte est déposée simultanément sur les deux faces d'un feuillard en acier nickelé perforé d'épaisseur 75µm de manière homogène. L'ensemble est ensuite séché afin d'en éliminer l'eau, puis laminé à l'épaisseur désirée et découpée pour obtenir une électrode positive. L'électrode finie, présente une porosité de 35% et 13g de matière enduite sèche par dm².

Une électrode positive plastifiée en dehors du domaine de l'invention (P5) est réalisée avec une pâte ayant pour composition pondérale :

| | |
|---|---|
| Matière électrochimiquement active | 84, 5% |
| Matériau conducteur Co(OH)₂ | 10% |
| Polymère A (EVA) | 1,2% |
| Polymère B (PTFE) | 2,5% |
| Polymère C (CMC) | 0,3% |
| Fibres polypropylène | 1,0% |
| Y₂O₃ | 0,5% |

La matière électrochimiquement active pulvérulente est constituée d'un hydroxyde à base de nickel, et contenant les additifs suivants : cobalt et zinc. La viscosité de la pâte est ajustée avec de l'eau. Le PTFE est introduit dans l'eau à la fin de la préparation de la pâte. La pâte est déposée simultanément sur les deux faces d'un feuillard en acier nickelé perforé d'épaisseur 75µm) de manière homogène. L'ensemble est ensuite séché afin d'en éliminer l'eau, puis laminé à l'épaisseur désirée et découpée pour obtenir une électrode positive. L'électrode finie, présente une porosité de 35% et 13g de matière enduite sèche par dm².

Une électrode positive plastifiée en dehors du domaine de l'invention (P6) est réalisée avec une pâte ayant pour composition pondérale :

| | |
|---|---|
| Matière électrochimiquement active | 83.0% |
| Matériau conducteur Co(OH)₂ | 10% |
| Polymère A (EVA) | 0,7% |
| Polymère B (PTFE) | 4,5% |
| Polymère C (CMC) | 0,3% |
| Fibres polypropylène | 1,0% |
| Y₂O₃ | 0,5% |

La matière électrochimiquement active pulvérulente est constituée d'un hydroxyde à base de nickel, et contenant les additifs suivants : cobalt et zinc. La viscosité de la pâte est ajustée avec de l'eau. Le PTFE est introduit dans l'eau à la fin de la préparation de la pâte. La pâte est déposée simultanément sur les deux faces d'un feuillard en acier nickelé perforé d'épaisseur 75µm de manière homogène. L'ensemble est ensuite séché afin d'en éliminer l'eau, puis laminé à l'épaisseur désirée et découpée pour obtenir une électrode positive. L'électrode finie, présente une porosité de 35% et 13g de matière enduite sèche par dm².

Une électrode positive plastifiée selon l'invention (P7) est réalisée avec une pâte ayant pour composition pondérale :

| | |
|---|---|
| Matière électrochimiquement active | 85,0% |
| Matériau conducteur Co(OH)₂ | 10% |
| Polymère A (EVA) | 0,7% |
| Polymère B (PTFE) | 2,5% |
| Polymère C (CMC) | 0,3% |
| Fibres polypropylène | 1,0% |
| Y₂O₃ | 0,5% |

La matière électrochimiquement active pulvérulente est constituée d'un hydroxyde à base de nickel, et contenant les additifs suivants : cobalt et zinc. La viscosité de la pâte est ajustée avec de l'eau. Le PTFE est introduit dans l'eau à la fin de la préparation de la pâte. La pâte est déposée simultanément sur les deux faces d'un feuillard en acier nickelé perforé d'épaisseur 75µm de manière homogène. L'ensemble est ensuite séché afin d'en éliminer l'eau, puis laminé à l'épaisseur désirée et découpée pour obtenir une électrode positive. L'électrode finie, présente une porosité de 35% et 13g de matière enduite sèche par dm².

Une électrode positive plastifiée en dehors du domaine de l'invention (P8) est réalisée avec une pâte ayant pour composition pondérale :

| | |
|---|---|
| Matière électrochimiquement active | 84, 9% |
| Matériau conducteur Co(OH)₂ | 10% |
| Polymère A (EVA) | 0,7% |
| Polymère B (PTFE) | 2,5% |
| Polymère C (CMC) | 0,4% |
| Fibres polypropylène | 1,0% |
| Y₂O₃ | 0,5% |

La matière électrochimiquement active pulvérulente est constituée d'un hydroxyde à base de nickel, et contenant les additifs suivants : cobalt et zinc. La viscosité de la pâte est ajustée avec de l'eau. Le PTFE est introduit dans l'eau à la fin de la préparation de la pâte. La pâte est déposée simultanément sur les deux faces d'un feuillard en acier nickelé perforé d'épaisseur 75µm de manière homogène. L'ensemble est ensuite séché afin d'en éliminer l'eau, puis laminé à l'épaisseur désirée et découpée pour obtenir une électrode positive. L'électrode finie, présente une porosité de 35% et 13g de matière enduite sèche par dm².

Une électrode positive plastifiée en dehors du domaine de l'invention (P9) est réalisée avec une pâte ayant pour composition pondérale :

| | |
|---|---|
| Matière électrochimiquement active | 85,0% |
| Matériau conducteur Co(OH)₂ | 10% |
| Polymère A (EVA) | 0,7% |
| Polymère B (PTFE) | 2,5% |
| Polymère C (CMC) | 0,3% |
| Fibres polypropylène | 1,0% |
| Y₂O₃ | 0,5% |

La matière électrochimiquement active pulvérulente est constituée d'un hydroxyde à base de nickel, et contenant les additifs suivants : cobalt et zinc. La viscosité de la pâte est ajustée avec de l'eau. Le PTFE est introduit dans l'eau simultanément avec l'EVA au début de la préparation de la pâte. La pâte est déposée simultanément sur les deux faces d'un feuillard en acier nickelé perforé d'épaisseur 75µm de manière homogène. L'ensemble est ensuite séché afin d'en éliminer l'eau, puis laminé à l'épaisseur désirée et découpée pour obtenir une électrode positive. L'électrode finie, présente une porosité de 35% et 13g de matière enduite sèche par dm².

Une électrode positive plastifiée selon l'invention (P10) est réalisée avec une pâte ayant pour composition pondérale :

| | |
|---|---|
| Matière électrochimiquement active | 85,0% |
| Matériau conducteur Co(OH)₂ | 10% |
| Polymère A (EVA) | 0,5% |
| Polymère B (PTFE) | 2,5% |
| Polymère C (CMC) | 0,3% |
| Polymère D (Silane) | 0,2% |
| Fibres polypropylène | 1,0% |
| Y₂O₃ | 0,5% |

La matière électrochimiquement active pulvérulente est constituée d'un hydroxyde à base de nickel, et contenant les additifs suivants : cobalt et zinc. La viscosité de la pâte est ajustée avec de l'eau. Le PTFE est introduit dans l'eau à la fin de la préparation de la pâte. La pâte est déposée simultanément sur les deux faces d'un feuillard en acier nickelé perforé d'épaisseur 75µm de manière homogène. L'ensemble est ensuite séché afin d'en éliminer l'eau, puis laminé à l'épaisseur désirée et découpée pour obtenir une électrode positive. L'électrode finie, présente une porosité de 35% et 13g de matière enduite sèche par dm².

Une électrode positive plastifiée selon l'invention (P11) est réalisée avec une pâte ayant pour composition pondérale :

| | |
|---|---|
| Matière électrochimiquement active | 84,8% |
| Matériau conducteur Co(OH)₂ | 10% |
| Polymère A (PSA) | 0, 9% |
| Polymère B (PTFE) | 2,5% |
| Polymère C (CMC) | 0,3% |
| Fibres polypropylène | 1,0% |
| Y₂O₃ | 0,5% |

La matière électrochimiquement active pulvérulente est constituée d'un hydroxyde à base de nickel, et contenant les additifs suivants : cobalt et zinc. La viscosité de la pâte est ajustée avec de l'eau. Le PTFE est introduit dans l'eau à la fin de la préparation de la pâte. La pâte est déposée simultanément sur les deux faces d'un feuillard en acier nickelé perforé d'épaisseur 75µm de manière homogène. L'ensemble est ensuite séché afin d'en éliminer l'eau, puis laminé à l'épaisseur désirée et découpée pour obtenir une électrode positive. L'électrode finie, présente une porosité de 35% et 13g de matière enduite sèche par dm².

### Test mécanique :

Afin de s'assurer de la bonne tenue mécanique des électrodes, un test de chute est réalisé de la façon suivante : chaque électrode est pesée, puis lâchée d'une hauteur de 50cm sur une surface plane. La chute est répétée 10 fois. Puis l'électrode est pesée de nouveau. Le résultat du test est exprimé comme le ratio de la masse initiale moins la masse finale rapportée à la masse initiale. Une électrode sera d'autant plus solide que ce ratio sera faible et lorsque la perte de matière au test de chute est supérieure à 0,5%, l'accumulateur n'est pas réalisable industriellement.

### Evaluation électrochimique en accumulateur étanche :

Un générateur électrochimique secondaire étanche NiCd de format Cs, dont l'électrode positive est l'électrode limitante, et dont la capacité nominale est de 1600 mAh est constitué des électrodes positives décrites ci-dessus et d'une électrode négative de type connu qui possède comme matière électrochimiquement active un hydroxyde de cadmium. L'électrode positive est accolée à une électrode négative dont elle est isolée par un séparateur non-tissé de polypropylène pour former le faisceau électrochimique. Le faisceau ainsi spiralé est inséré dans un godet métallique et imprégné d'un électrolyte alcalin qui est une solution alcaline aqueuse constituée d'un mélange d'hydroxyde de potassium KOH 7,5N, d'hydroxyde de sodium NaOH 0,4N et d'hydroxyde de lithium LiOH 0,5N pour constituer les accumulateurs A à K. La composition de chacun des accumulateurs est décrite dans les tableaux 1 et 2.

### ▪ Formation électrique :

Après un repos de 48 heures à température ambiante, une formation électrique des accumulateurs est effectuée dans les conditions suivantes :
Cycle 1 :
   Repos 2h à 80°C
   Charge au courant de 0,025Ic pendant 8h à 80°C, où Ic est le courant nécessaire pour décharger la capacité nominale C du générateur en 1h.
   Repos 2h à 20°C
   Charge 3h au courant de 0,33Ic
   Décharge à 0,2Ic jusqu'à une tension de 1V

### ▪ Performances électriques :

Après formation, la capacité des accumulateurs est mesurée par les cycles suivants :
Cycles 2 à 4 :
   Charge 16h au courant de 0,1Ic
   Décharge au courant de 0,2Ic jusqu'à une tension de 1V

Puis, une mesure d'autodécharge à l'état initial est réalisée en effectuant le cycle suivant :
Cycle 5 :
   Charge 16h au courant de 0,1Ic
   Repos 28 jours à température ambiante
   Décharge à Ic jusqu'à une tension de 1V L'autodécharge initiale est calculée en rapportant la capacité mesurée au cycle 5 à la capacité mesurée au cycle 4.

Ensuite les accumulateurs subissent des cycles de charge/décharge à une température élevée de 55°C, ce qui favorise d'une part le gonflement de l'électrode positive, et d'autre part la réaction de dégradation des liants :
Cycles 6 à 56 :
   Charge 24h au courant de 0,05 Ic à 55°C
   Décharge au courant de 1C jusqu'à une tension de 1V à 55°C

Après 50 cycles, la capacité des accumulateurs est contrôlée par le cycle suivant
Cycle 57 :
   Charge 24h au courant de 0,05Ic
   Décharge au courant de Ic jusqu'à une tension de 1V

Puis une mesure d'autodécharge est à nouveau réalisée :
Cycle 58 :
   Charge 24h au courant de 0,05Ic
   Repos 28 jours à température ambiante
   Décharge au courant de Ic jusqu'à une tension de 1V

La perte de capacité par autodécharge après vieillissement est calculée en rapportant la capacité mesurée au cycle 58 à la capacité mesurée au cycle 57.

**Tableau 1 : résultats obtenus avec des électrodes positives de l'art antérieur**

| Accumulateur | A | B | C |
|---|---|---|---|
| Electrode | P1 | P2 | P3 |
| Support | feuillard | feuillard | feuillard |
| Polymère A (%) | 0,7 | 0,7SBR carboxylé | 0,9 PSA |
| Polymère B (%) | 0 | 2,0 | 0 |
| Polymère C (%) | 0,3 | 0,3 | 0,3 |
| Polymère D (%) | 0 | 0 | 0 |
| Perte de matière (%) | 0,4 | 0,4 | 0,4 |
| Cycle 4 (mAh) | 1618 | 1592 | 1603 |
| Cycle 57 (mAh) | 1490 | 961 | 1458 |
| Perte//cycle 5 (%) | 8% | 40% | 9% |
| Cycle 58 Autodécharge (%) | 100% | 23% | 71% |
| Incorporation du polymère B simultanément ou séparément des autres constituants du liant | - | séparée | - |

**Tableau 2 : résultats obtenus avec des compositions de liant dans et hors de l'invention**

| Accumulateur | D | E | F | G | H | J | K |
|---|---|---|---|---|---|---|---|
| Electrode | P4 | P5 | P6 | P7 | P8 | P10 | P11 |
| Support | feuillard | feuillard | feuillard | feuillard | feuillard | feuillard | feuillard |
| Polymère A (%) | 0,7 | 1,2 | 0,7 | 0,7 | 0,7 | 0,5 | 0,9 PSA |
| Polymère B (%) | 0,4 | 2,5 | 4,5 | 2,5 | 2,5 | 2,5 | 2,5 |
| Polymère C (%) | 0,3 | 0,3 | 0,3 | 0,3 | 0,4 | 0,3 | 0,3 |
| Polymère D (%) | 0 | 0 | 0 | 0 | 0 | 0,2 | 0 |
| Perte de matière (%) | 0,4 | 0,3 | 0,3 | 0,4 | 0,4 | 0,3 | 0,4 |
| Cycle 5 (mAh) | 1612 | 1470 | 1450 | 1605 | 1605 | 1603 | 1595 |
| Cycle 57 (mAh) | 1480 | 1255 | 1334 | 1480 | 1412 | 1499 | 1459 |
| Perte//cycle 5 (%) | 8,1% | 14,6% | 8,0% | 7,8% | 12% | 6,3% | 8,5% |
| Cycle 58 Autodécharge (%) | 58% | 26% | 22% | 27% | 23% | 22% | 22% |
| Incorporation du polymère B simultanément ou séparément des autres constituants du liant | séparée | séparée | séparée | séparée | séparée | séparée | séparée |

Les électrodes positives plastifiées de l'art antérieur P1, P2 et P3 présentent une tenue mécanique initiale permettant de réaliser industriellement des accumulateurs cylindriques (perte de matière inférieure à 0,5%). Les électrodes P1 et P3 présentent une perte de capacité mesurée après 50 cycles inférieure à 10%. Cependant, l'autodécharge des accumulateurs comprenant les électrodes P1 et P3 après 50 cycles à 55°C, donc après un vieillissement accéléré, n'est pas satisfaisante. En effet, on mesure au cycle 58 des taux d'autodécharge pour P1 et P3 de 100% et 71% respectivement. Ceci peut s'expliquer par la présence de particules de matières active positive qui ont migré dans le séparateur entraînant des micro courts-circuits. Les accumulateurs B contenant les électrodes P2 de l'art antérieur présentent après vieillissement accéléré une perte de capacité par autodécharge satisfaisante, mais leur capacité au cycle 57 est inférieure de 40% à la valeur obtenue au cycle 4. En effet, les électrodes P2 contiennent un copolymère de styrène et butadiène qui dans ces conditions de cyclage se dégrade plus rapidement que le copolymère d'éthylène et d'acétate de vinyle ou le copolymère de styrène et d'acrylate, ce qui génère davantage de carbonates qui sont néfastes pour le fonctionnement de l'accumulateur.

Les accumulateurs contenant les électrodes positives plastifiées de l'invention P7, P10 et P11, pour lesquelles le PTFE a été introduit en dernier lors de la fabrication de la pâte, en une quantité supérieure à 0,4 % et inférieure à 4%, montrent une perte de capacité inférieure à 9% et une amélioration de l'autodécharge dans des conditions accélérées de vieillissement. En effet, le taux d'autodécharge pour ces accumulateurs est compris entre 22 et 27 %, ce qui est satisfaisant.

Les accumulateurs contenant les électrodes positives plastifiées hors de l'invention P5 et P6, qui comprennent respectivement une quantité de polymère a) supérieure à 1% et de polymère b) supérieure à 4%, présentent une capacité insuffisante au cycle 5 (avant vieillissement).

Lorsque le taux de CMC est supérieur à 0,3% (Electrode P8), la perte de capacité après vieillissement accéléré augmente de 6,3% (P10) à 12%, la quantité de carbonates générés étant plus importante.

Lorsque le taux de PTFE est inférieur à 0,5% (Electrode P4), la quantité de liant stable dans l'électrode positive est insuffisante pour éviter les micro courts-circuits et l'autodécharge augmente (58%).

On comprend d'après ces résultats, qu'une électrode positive mousse traditionnelle, grâce à son support tridimensionnel peut être réalisée uniquement en utilisant un épaississant et du PTFE alors qu'une électrode positive plastifiée comportant comme liant uniquement du PTFE et un épaississant ne présente pas une tenue mécanique suffisante pour supporter toutes les opérations de fabrication des accumulateurs sans pertes de matière importantes.

On comprend également que les étapes d'incorporation des constituants du liant dans la pâte d'une électrode empâtée ont une influence sur la stabilité mécanique de la matière électrochimiquement active au support conducteur de courant. Lorsque le PTFE est introduit en début de fabrication de la pâte (P9), celui-ci développe des interactions avec les autres liants, ce qui dégrade la cohésion de la matière enduite, rendant irréalisable une fabrication industrielle des électrodes. Le test de chute donne une valeur de 2,2%, bien supérieure à la valeur de 0,5% utilisée comme critère, comme exposé ci-avant. L'introduction du PTFE dans la pâte d'une électrode plastifiée séparément des autres constituants du liant permet d'augmenter la tenue de la matière électrochimiquement active au support collecteur de courant. Ceci est confirmé en comparant l'électrode P7 selon l'invention qui présente un taux de chute de matière active de 0,4%, par rapport à l'électrode P9 hors invention qui présente un taux de chute de 2,2%, la nature et les proportions des constituants du liant étant identiques dans les deux cas.

## Revendications

1. Electrode positive non frittée d'accumulateur à électrolyte alcalin comprenant un support conducteur de courant et une pâte comprenant une matière électrochimiquement active et un liant ;
le liant comprenant :
- au moins un polymère a) choisi dans le groupe comprenant un copolymère de styrène et d'acrylate, un copolymère d'éthylène et d'acétate de vinyle (EVA), ou un mélange de ceux-ci, ledit polymère a) n'étant pas fluoré, et sa proportion massique étant inférieure ou égale à 1 % du poids de la pâte ;
- au moins un polymère fluoré b), en une proportion massique allant de 0,5 à 4% du poids de la pâte ;
- au moins un épaississant c) qui est :
- soit un polymère cellulosique choisi dans le groupe comprenant la carboxymethylcellulose (CMC), l'hydroxypropylmethylcellulose (HPMC), l'hydroxypropylcellulose (HPC), l'hydroxyethylcellulose (HEC),
- soit un polymère de type polyacideacrylique (PAAC),
- soit une gomme xanthane,
ou un mélange de ceux-ci, en une proportion massique inférieure ou égale à 0,3% du poids de la pâte.

2. Electrode selon la revendication 1, dans laquelle la proportion massique du polymère a) est de 0,1 à 1%, ou de préférence de 0,3 à 0,9% du poids de la pâte.

3. Electrode selon la revendication 1 ou 2, dans laquelle la proportion massique du polymère fluoré b) est de 0,1 à 4%, ou de préférence de 1 à 3% du poids de la pâte.

4. Electrode selon la revendication 1, 2 ou 3, dans laquelle la proportion massique de l'épaississant c) est de 0,01 à 0,3%, ou de préférence de 0,05 à 0,25% du poids de la pâte.

5. Electrode selon l'une des revendications précédentes, dans laquelle le polymère fluoré est choisi dans le groupe comprenant le polytétrafluoroéthylène (PTFE), un copolymère fluoré éthylène / propylène (FEP), l'hexafluoropropylène (HFP), ou un mélange de ceux-ci.

6. Electrode selon l'une des revendications précédentes, comprenant en outre du silane de formule générale X-Si(OR)₃,
R pouvant être choisi dans le groupe comprenant les groupements méthyle, éthyle, isopropyle, cyclohexyle ou phényle ;
X pouvant être choisi dans le groupe comprenant les groupements epoxy, amine, styrylamine, méthacrylate, vinyle, chloroalkyle.

7. Electrode selon la revendication 6, dans laquelle R est un groupement méthyle et X est un groupement époxy.

8. Electrode selon la revendication 6, dans laquelle le silane est de type 3-glycidoxypropyltrimethoxy-silane.

9. Electrode selon l'une des revendications 6 à 8, dans laquelle la proportion massique de silane par rapport au poids de la pâte est inférieure à 0,5%, ou de préférence de 0,05 à 0,25 %.

10. Electrode selon l'une des revendications 1 à 5, dans laquelle le liant comprend uniquement :
a)un copolymère d'éthylène et d'acétate de vinyle (EVA), ou un copolymère de styrène et d'acrylate, ou un mélange de ceux-ci ;
b)un polymère fluoré ;
c)un épaississant qui est :
- soit un polymère cellulosique choisi dans le groupe comprenant la carboxymethylcellulose (CMC), l'hydroxypropylmethylcellulose (HPMC), l'hydroxypropylcellulose (HPC), l'hydroxyethylcellulose (HEC),
- soit un polymère de type polyacideacrylique (PAAC),
- soit une gomme xanthane
ou un mélange de ceux-ci.

11. Electrode selon l'une des revendications précédentes, dans laquelle le support conducteur de courant est choisi dans le groupe comprenant un feuillard plein ou perforé, un métal déployé, une grille.

12. Electrode selon la revendication 11, dans laquelle le support conducteur a une épaisseur dans la zone non perforée inférieure à 0,1 mm.

13. Electrode selon l'une des revendications précédentes, comprenant en outre de 5 à 20% en poids de la pâte d'un matériau conducteur, ou de préférence de 5 à 15% du poids de la pâte.

14. Electrode selon l'une des revendications précédentes, dans laquelle la pâte contient un composé à base d'yttrium, d'ytterbium, de niobium ou de strontium.

15. Electrode selon l'une des revendications précédentes, comprenant en outre des fibres.

16. Accumulateur à électrolyte alcalin comprenant une électrode selon l'une des revendications 1 à 15.

17. Procédé de fabrication d'une électrode positive non frittée d'accumulateur à électrolyte alcalin, ledit procédé comprenant les étapes de :
a) préparation d'un mélange comprenant :
- une matière électrochimiquement active,
- au moins un polymère choisi dans le groupe comprenant un copolymère de styrène et d'acrylate, un copolymère d'éthylène et d'acétate de vinyle (EVA), ou un mélange de ceux-ci, ledit polymère n'étant pas fluoré ;
- un épaississant qui est :
- soit un polymère cellulosique choisi dans le groupe comprenant la carboxymethylcellulose (CMC), l'hydroxypropylmethylcellulose (HPMC), l'hydroxypropylcellulose (HPC), l'hydroxyethylcellulose (HEC),
- soit un polymère de type polyacideacrylique (PAAC),
- soit une gomme xanthane,
ou un mélange de ceux-ci,
- de l'eau ;
b) formation d'une pâte ;
c) ajout d'un polymère fluoré à la pâte obtenue à l'étape b) ;
- la proportion massique du polymère choisi dans le groupe comprenant un copolymère de styrène et d'acrylate, un copolymère d'éthylène et d'acétate de vinyle (EVA), ou un mélange de ceux-ci, étant inférieure ou égale à 1 % du poids de la pâte ;
- la proportion massique du polymère fluoré allant de 0,5 à 4% du poids de la pâte ;
- la proportion massique de l'épaississant étant inférieure ou égale à 0,3% du poids de la pâte ;d) dépôt de la pâte obtenue à l'étape c) sur un support conducteur ;
e) séchage de l'électrode.

18. Procédé selon la revendication 17, dans lequel dans l'étape c), le polymère fluoré est ajouté à la pâte sous la forme d'une solution aqueuse.

19. Procédé de fabrication selon l'une des revendications 17 à 18, dans lequel l'électrode est selon l'une des revendications 1 à 15.

## Patentansprüche

1. Nicht gesinterte positive Elektrode für einen Akkumulator mit Alkalielektrolyt, umfassend einen stromführenden Träger und eine Paste, umfassend ein elektrochemisch aktives Material und ein Bindemittel; wobei das Bindemittel umfasst:
- mindestens ein Polymer a), das in der Gruppe ausgewählt ist, die ein Copolymer von Styrol und Acrylat, ein Copolymer von Ethylen und Vinylacetat (EVA) oder ein Gemisch derselben umfasst, wobei das Polymer a) nicht fluorhaltig ist und sein Masseanteil kleiner oder gleich 1% des Gewichts der Paste ist;
- mindestens ein fluorhaltiges Polymer b) in einem Masseanteil von 0,5 bis 4% des Gewichts der Paste;
- mindestens ein Verdickungsmittel c), das:
o entweder ein Zellulosepolymer ist, das in der Gruppe ausgewählt ist, die Carboxymethylzellulose (CMC), Hydroxypropylmethylzellulose (HPMC), Hydroxypropylzellulose (HPC), Hydroxyethylzellulose (HEC) umfasst,
∘ oder ein Polymer vom Typ Polyacrylsäure (PAAC) ist,
∘ oder ein Xanthan-Gummi ist,
∘ oder ein Gemisch derselben ist,
in einem Masseanteil kleiner oder gleich 0,3% des Gewichts der Paste.

2. Elektrode nach Anspruch 1, bei der der Masseanteil des Polymers a) 0,1 bis 1% oder vorzugsweise 0,3 bis 0,9% des Gewichts der Paste beträgt.

3. Elektrode nach Anspruch 1 oder 2 bei der der Masseanteil des fluorhaltigen Polymers b) 0,1 bis 4% vorzugsweise 1 bis 3% des Gewichts der Paste beträgt.

4. Elektrode nach Anspruch 1, 2 oder 3, bei der der Masseanteil des Verdickungsmittels c) 0,01 bis 0,3% oder vorzugsweise 0,05 bis 0,25% des Gewichts der Paste beträgt.

5. Elektrode nach einem der vorhergehenden Ansprüche, bei der das fluorhaltige Polymer in der Gruppe ausgewählt ist, die das Polytetrafluorethylen (PTFE), ein fluorhaltiges Copolymer Ethylen/Propylen (FEP), das Hexafluorpropylen (HFP) oder ein Gemisch derselben umfasst.

6. Elektrode nach einem der vorhergehenden Ansprüche, ferner umfassend Silan der allgemeinen Formel X-Si(OR)₃,
∘ wobei R in der Gruppe ausgewählt sein kann, die die Methyl-, Ethyl-, Isopropyl-, Cyclohexyl- oder Phenylgruppierungen umfasst;
∘ wobei X in der Gruppe ausgewählt sein kann, die die Epoxy-, Amin-, Styrylamin-, Methacrylat- Vinyl-, Chloralkylgruppierungen umfasst.

7. Elektrode nach Anspruch 6, bei der R eine Methylgruppierung und X eine Epoxygruppierung ist.

8. Elektrode nach Anspruch 6, bei der das Silan vom Typ 3-Glycidoxypropyltrimethoxy-Silan ist.

9. Elektrode nach einem der Ansprüche 6 bis 8, bei der der Masseanteil von Silan bezogen auf das Gewicht der Paste kleiner als 0,5% oder vorzugsweise 0,05 bis 0,25% ist.

10. Elektrode nach einem der Ansprüche 1 bis 5, bei der das Bindemittel nur umfasst:
a) ein Copolymer von Ethylen und Vinylacetat (EVA) oder ein Copolymer von Styrol und Acrylat, oder ein Gemisch derselben;
b) ein fluorhaltiges Polymer;
c) ein Verdickungsmittel, das:
- entweder ein Zellulosepolymer ist, das in der Gruppe ausgewählt ist, die Carboxymethylzellulose (CMC), Hydroxypropylmethylzellulose (HPMC), Hydroxypropylzellulose (HPC), Hydroxyethylzellulose (HEC) umfasst,
- oder ein Polymer vom Typ Polyacrylsäure (PAAC) ist,
- oder ein Xanthan-Gummi ist,
oder ein Gemisch derselben ist.

11. Elektrode nach einem der vorhergehenden Ansprüche, bei der der stromführende Träger in der Gruppe ausgewählt ist, die eine volle oder perforierte Folie, ein ausgebreitetes Metall, ein Gitter umfasst.

12. Elektrode nach Anspruch 11, bei der der stromführende Träger eine Dicke in der nicht perforierten Zone von weniger als 0,1 mm hat.

13. Elektrode nach einem der vorhergehenden Ansprüche, ferner umfassend 5 bis 20 Gew.-% der Paste eines leitenden Materials oder vorzugsweise 5 bis 15% des Gewichts der Paste.

14. Elektrode nach einem der vorhergehenden Ansprüche, bei der die Paste eine Verbindung auf Basis von Yttrium, Ytterbium, Niobium oder Strontium enthält.

15. Elektrode nach einem der vorhergehenden Ansprüche, ferner umfassend Fasern.

16. Akkumulator mit Alkalielektrolyt, umfassend eine Elektrode nach einem der Ansprüche 1 bis 15.

17. Verfahren zur Herstellung einer nicht gesinterten positiven Elektrode mit Alkalielektrolyt, wobei das Verfahren die folgenden Schritte umfasst:
a) Herstellung eines Gemisches, umfassend:
- ein elektrochemisch aktives Material;
- mindestens ein Polymer, das in der Gruppe ausgewählt ist, die ein Copolymer von Styrol und Acrylat, ein Copolymer von Ethylen und Vinylacetat (EVA) oder ein Gemisch derselben umfasst, wobei das Polymer b) nicht fluorhaltig ist;
- ein Verdickungsmittel, das:
- entweder ein Zellulosepolymer ist, das in der Gruppe ausgewählt ist, die Carboxymethylzellulose (CMC), Hydroxypropylmethylzellulose (HPMC), Hydroxypropylzellulose (HPC), Hydroxyethylzellulose (HEC) umfasst,
- oder ein Polymer vom Typ Polyacrylsäure (PAAC) ist,
- oder ein Xanthan-Gummi ist,
oder ein Gemisch derselben ist,
- Wasser;
b) Bildung einer Paste;
c) Hinzufügen eines fluorhaltigen Polymers zu der in Schritt b) erhaltenen Paste;
- wobei der Masseanteil des Polymers, das in der Gruppe ausgewählt ist, die ein Copolymer von Styrol und Acrylat, ein Copolymer von Ethylen und Vinylacetat (EVA) oder ein Gemisch derselben umfasst, kleiner oder gleich 1 % des Gewichts der Paste beträgt;
- wobei der Masseanteil des fluorhaltigen Polymers von 0,5 bis 4% des Gewichts der Paste beträgt;
- wobei der Masseanteil des Verdickungsmittels kleiner oder gleich 0,3% des Gewichts der Paste ist;
d) Aufbringen der in Schritt c) erhaltenen Paste auf einen stromführenden Träger;
e) Trocknen der Elektrode.

18. Verfahren nach Anspruch 17, bei dem in Schritt c) das fluorhaltige Polymer zu der Paste in Form einer wässerigen Lösung hinzugefügt wird.

19. Herstellungsverfahren nach einem der Ansprüche 17 bis 18, bei dem die Elektrode nach einem der Ansprüche 1 bis 15 ausgeführt ist.

## Claims

1. A non-sintered positive electrode for an alkaline electrolyte secondary cell comprising a current conductive support and a paste comprising an electrochemically active material and a binder;
the binder comprising:
- at least one polymer a) selected from the group comprising a copolymer of a styrene and acrylate, a copolymer of ethylene and vinyl acetate (EVA), or a mixture thereof, wherein said polymer a) is not fluorinated, and its weight percentage is less than or equal to 1% of the weight of the paste;
- at least one fluorinated polymer b), in a weight percentage ranging from 0.5 to 4% of the weight of the paste;
- at least one thickener c) which is:
- either a cellulosic polymer selected from the group comprising carboxymethylcellulose (CMC), hydroxypropylmethylcellulose (HPMC), hydroxypropylcellulose (HPC), hydroxyethylcellulose (HEC),
- or a polymer of the poly acrylic acid (PAAC) type,
- or a xanthane gum,
or a mixture thereof, in a weight percentage less than or equal to 0.3% of the weight of the paste.

2. The electrode according to claim 1, wherein the weight percentage of polymer a) is from 0.1 to 1%, or preferably from 0.3 to 0.9% of the weight of the paste.

3. The electrode according to claim 1 or 2, wherein the weight percentage of the fluorinated polymer b) is from 0.1 to 4%, or preferably from 1 to 3% of the weight of the paste.

4. The electrode according to claim 1, 2 or 3, wherein the weight percentage of the thickener c) is from 0.01 to 0.3%, or preferably from 0.05 to 0.25% of the weight of the paste.

5. The electrode according to one of the preceding claims, wherein the fluorinated polymer is selected from the group comprising polytetrafluoroethylene (PTFE), a fluorinated ethylene/propylene (FEP) copolymer, hexafluoropropylene (HFP), or a mixture thereof.

6. The electrode according to one of the preceding claims, further comprising silane of general formula X-Si(OR)3,
R being selected from the group comprising methyl, ethyl, isopropyl, cyclohexyl or phenyl groups;
X being selected in the group comprising epoxy, amine, styrylamine, methacrylate, vinyl, chloroalkyl groups.

7. The electrode according to claim 6, wherein R is a methyl group and X is an epoxy group.

8. The electrode according to claim 6, wherein the silane is of the 3-glycidoxypropyltrimethoxy-silane type.

9. The electrode according to one of claims 6 to 8, wherein the weight percentage of silane with respect to the weight of paste is less than 0.5%, or preferably from 0.05 to 0.25%.

10. The electrode according to one of claims 1 to 5, wherein the binder solely comprises:
a) a copolymer of ethylene and vinyl acetate (EVA), or a copolymer of styrene and acrylate, or a mixture thereof;
b) a fluorinated polymer;
c) a thickener which is:
- either a cellulosic polymer selected from the group comprising carboxymethylcellulose (CMC), hydroxypropylmethylcellulose (HPMC), hydroxypropylcellulose (HPC), hydroxyethylcellulose (HEC),
- or a polymer of the poly acrylic acid (PAAC) type,
- or a xanthane gum,
or a mixture thereof.

11. The electrode according to one of the preceding claims, wherein the current conductive support is selected from the group comprising a non-perforated or perforated foil, an expanded metal, a grid.

12. The electrode according to claim 11, wherein the conducting support has a thickness, in the non-perforated region, less than 0.1 mm.

13. The electrode according to one of the preceding claims, further including from 5 to 20% by weight of the paste of a conductive material, or preferably from 5 to 15% by weight of the paste.

14. The electrode according to one of the preceding claims, wherein the paste contains a compound based on yttrium, ytterbium, niobium or strontium.

15. The electrode according to one of the preceding claims, further including fibers.

16. An alkaline electrolyte secondary cell comprising an electrode according to one of claims 1 to 15.

17. A method for producing a non-sintered positive electrode for an alkaline electrolyte secondary cell, said method comprising the steps of:
a) preparing a mixture comprising:
- an electrochemically active material,
- at least one polymer selected from the group comprising a copolymer of a styrene and acrylate, a copolymer of ethylene and vinyl acetate (EVA), or a mixture thereof, wherein said polymer is not fluorinated;
- a thickener which is:
- either a cellulosic polymer selected from the group comprising carboxymethylcellulose (CMC), hydroxypropylmethylcellulose (HPMC), hydroxypropylcellulose (HPC), hydroxyethylcellulose (HEC),
- or a polymer of the poly acrylic acid (PAAC) type,
- or a xanthane gum,
or a mixture thereof,
- water;
b) forming a paste;
c) adding a fluorinated polymer to the paste obtained at step b) wherein;
- the weight percentage of polymer selected from the group comprising a copolymer of a styrene and acrylate, a copolymer of ethylene and vinyl acetate (EVA), or a mixture thereof, is less than or equal to 1% of the weight of the paste;
- the weight percentage of fluorinated polymer ranges from 0.5 to 4% of the weight of the paste;
- the weight percentage of the thickener is less than or equal to 0.3% of the weight of the paste;
d) depositing the paste obtained at step c) on a conductive support;
e) drying the electrode.

18. The method according to claim 17, wherein in step c), the fluorinated polymer is added to the paste in the form of an aqueous solution.

19. The production method according to one of claims 17 to 18, wherein the electrode is according to one of claims 1 to 15.
